# EUROPÄISCHE PATENTANMELDUNG

(11) **EP 0 886 357 A2**
(43) Veröffentlichungstag der Anmeldung: **23.12.1998**
(21) Anmeldenummer: 98111012.5
(22) Anmeldetag: 16.06.1998
(51) Int. Cl.: H02G 3/04, C09J 7/04, H01B 3/50

(54) **Schutzummantelung für Kabel, Litzen, Kabelbäume und dergleichen**

(30) Priorität: 18.06.1997 DE 29710582 U
(71) Anmelder: Mohr, Karl Eugen, 67466 Lambrecht (DE)
(72) Erfinder: Mohr, Karl Eugen, 67466 Lambrecht (DE)
(74) Vertreter: Patentanwälte Möll und Bitterich

(57) **Zusammenfassung**

Eine Schutzummantelung für Kabelbäume und dergleichen langgestreckte, bewegliche Gegenstände, die in rotierenden und vibrierenden Maschinen, Anlagen oder Fahrzeugen verlegt werden sollen, besitzt eine Außenschicht (10), bevorzugt aus einem Polyester-Spinnfaservlies, und eine mittels einer Kaschierschicht (11) fest verbundene weitere Schicht (12) aus einem Polyester-Gewirke. Auf dieser ist mit Hilfe einer weiteren Kaschierschicht (17) ein Schaumstoff- oder Filzstreifen (18) aufkaschiert. Der Schaumstoff- oder Filzstreifen (18) ist schmäler zugeschnitten als die Einheit aus Außenschicht (10) und weiterer Schicht (12), so daß ein Überschlag entsteht. Auf diesem Überschlag ist ein Hakenband (21) eines Klettverschlusses befestigt. Das zugehörige Flauschband (22) ist auf der Außenschicht (10) befestigt. Selbstklebende, mit einem Schutzpapier (14, 20) abgedeckte Klebstreifen (13, 19) dienen der schnellen und sicheren Befestigung der Schutzummantelung auf dem Kabelbaum.

## Beschreibung

Die Erfindung betrifft Schutzummantelungen für Kabel, Leitungen, Litzen, Hüllrohre und dergleichen langgestreckte, bewegliche Gegenstände, insbesondere für Kabelbäume, die in rotierenden bzw. vibrierenden Maschinen, Anlagen oder Fahrzeugen verlegt werden sollen, gemäß dem Oberbegriff des Anspruchs 1.

Sind in rotierenden bzw. vibrierenden Maschinen, Anlagen oder Fahrzeugen langgestreckte Gegenstände wie Elektrokabel, Litzen, Leitungen, Hüllrohre von Bowdenzügen oder auch Kabelbäume verlegt, so werden diese in Schwingungen versetzt. Dadurch werden unerwünschte Geräusche erzeugt. Außerdem können Beschädigungen auftreten, beispielsweise durch scharfe Blechkanten. Aus diesem Grunde werden zusätzliche Schutzummantelungen angebracht.

Eine derartige Schutzummantelung ist bekannt aus der DE-U 295 10 907. Diese besteht aus einer glatten Außenbahn, auf die ein Schaumstoffstreifen so aufgeklebt ist, daß die Außenbahn entlang der einen Längskante einen Überschlag bildet. Die Innenseite dieses Überschlags ist mit einem selbstklebenden Material belegt, ebenso die freie Oberfläche des Schaumstoffstreifens. Dadurch steht die ganze Innenfläche zur Fixierung der Schutzummantelung auf den zu schützenden Gegenständen zur Verfügung. Durch diese Materialkombination konnten hohe Abriebfestigkeit, gute Gerauschdämpfung, gute Verarbeitbarkeit und leichte Verlegbarkeit günstig miteinander kombiniert 'werden.

Bei der praktischen Anwendung dieser Schutzummantelung hat sich jedoch herausgestellt, daß sie manchmal zu stark aufträgt, beispielsweise wenn der damit isolierte Kabelbaum in engen Räumen, z. B. im Holm der Heckklappen von Kraftfahrzeugen, verlegt werden muß. Der Versuch, den dicken Schaumstoffstreifen einfach wegzulassen, war nicht von Erfolg gekrönt, da die Schutzummantelung dann nicht die an sie gestellten Anforderungen erfüllen konnte.

Der vorliegenden Erfindung liegt daher die Aufgabe zugrunde, eine Schutzummantelung der gattungsgemäßen Art im Hinblick auf minimale Stärke bei maximaler Dämpfungs- und Isolierungswirkung weiterzuentwickeln.

Diese Aufgabe wird gelöst durch eine Schutzummantelung mit den Merkmalen des Anspruchs 1.

Die erfindungsgemäße Schutzummantelung besitzt eine fest verbundene Einheit aus einem Spinnfaservlies und einem Gewirke. Das Gewirke ist für die Formstabilität der Schutzummantelung verantwortlich und ist trotzdem sehr flexibel. Trotz geringer Stärke besitzt es eine hohe Festigkeit gegen Abrieb durch scharfe Blechkanten.

Vorzugsweise bildet das Spinnfaservlies die Außenschicht. Dank der glatten Vliesschicht ist die Gefahr des Verhakens, die bei gewirkten Schichten nicht auszuschließen ist, völlig beseitigt.

Zum Schließen der fertiggestellten Schutzummantelung kann, wie an sich bekannt, ein selbstklebender Klebstreifen vorgesehen sein.

Gemäß einer alternativen Ausführungsform wird die fertiggestellte Schutzummantelung mittels eines Klettverschlusses geschlossen, bestehend aus einem Hakenband und einem Flauschband.

Ein solcher Klettverschluß hat eine Reihe von Vorteilen. Zum einen entfällt das Abziehen der Schutzpapiere von den selbstklebenden Klebstreifen und der damit verbundene Zeitaufwand. Des weiteren können Klettverschlüsse jederzeit wieder geöffnet und geschlossen werden. Zwar ist ein aus Hakenband und Flauschband bestehender Klettverschluß teurer als ein oder zwei selbstklebende Klebstreifen; es hat sich jedoch herausgestellt, daß die Montage so viel schneller von statten geht, daß die Materialmehrkosten durch die Lohnkostenersparnis deutlich überkompensiert werden.

Der wesentliche Vorteil ist jedoch, daß der Klettverschluß, anders als der Klebverschluß nach dem Stand der Technik, weder durch Alter noch durch Wärme aufgeht. Mit einer solchen Schutzummantelung ausgerüstete Kabelbäume können daher beispielsweise auch im Motorraum von Kraftfahrzeugen verlegt werden.

Gemäß einer vorteilhaften Weiterbildung der Erfindung befindet sich zwischen der Außenschicht und der weiteren Schicht eine Kaschierschicht Eine solche Kaschierschicht ist immer dann vorzusehen, wenn sich Außenschicht und weitere Schicht nicht direkt miteinander verbinden lassen.

Wie an sich bekannt, kann auf der weiteren Schicht ebenfalls ein vorzugsweise dünner Filz- oder Schaumstoffstreifen befestigt sein, wobei dieser schmaler zugeschnitten ist, so daß ein Überschlag entsteht, auf dem dann der weitere Verschlußstreifen - selbstklebender Klebstreifen oder Klettverschluß - angebracht ist. Der Vorteil dieser Ausführungsform ist eine höhere Elastizität der Schutzummantelung, eine noch bessere Geräuschdämpfung, eine bessere Anpassung an unregelmäßige Oberflächen und ein nur wenig auftragender Verschluß in Form des Überschlags.

Falls sich Gewirke oder Vlies und Filz bzw. Schaumstoff nicht direkt miteinander verbinden lassen, wird gemäß einer Weiterbildung der Erfindung zwischen diesen beiden Schichten ebenfalls eine Kaschierschicht vorgesehen.

Die Schaumstoffschicht ihrerseits besteht bevorzugt aus PUR-Weichschaum, aus PE-Schaum oder einem Zellkautschuk.

Weitere Ausgestaltungen der Erfindung sind Gegenstand der restlichen Unteransprüche.

Anhand der Zeichnung soll die Erfindung in Form eines Ausführungsbeispiels näher erläutert werden. Es zeigen jeweils in perspektivischer, schematischer Darstellung
Fig. 1 eine erste Materialbahn zur Herstellung einer Schutzummantelung,
Fig. 2 eine daraus hergestellte Schutzummantelung und
Fig. 3 eine zweite Materialbahn zur Herstellung einer Schutzummantelung.

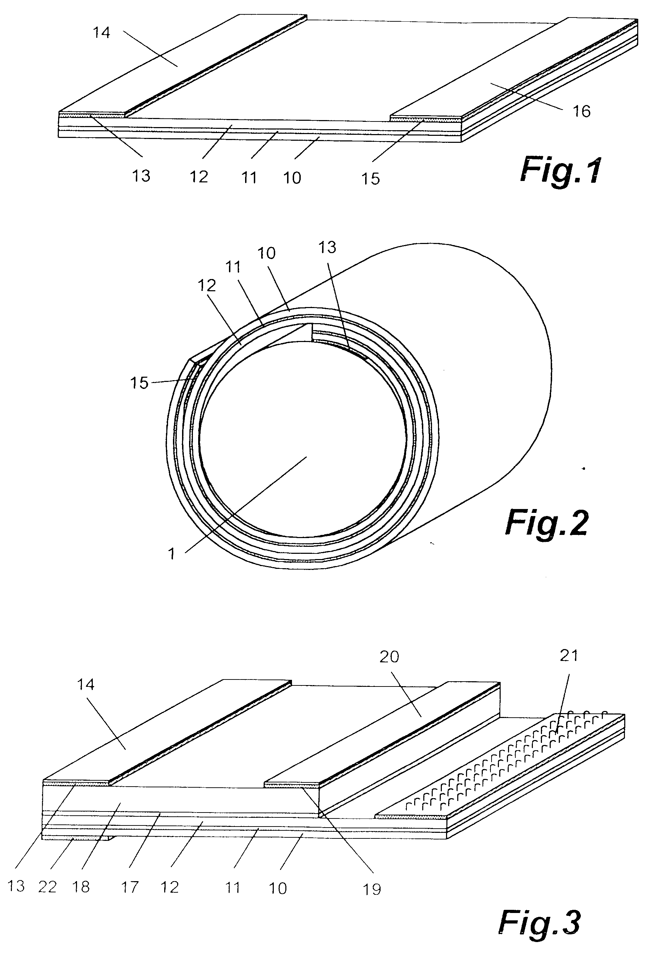

Fig. 1 zeigt eine mehrschichtige Materialbahn zur Herstellung von Schutzumhüllungen für langgestreckte bewegliche Gegenstände, insbesondere für Kabelbäume 1. Sie besteht aus einer Außenschicht 10 in Form eines PES-Spinnfaservlieses oder PES-Gewirkes. Auf diese ist gegebenenfalls mit Hilfe einer Kaschierschicht 11 eine Bahn 12 aus einem PES-Gewirke oder PES-Spinnfaservlies aufkaschiert. Diese Materialkombination besitzt eine hohe Formstabilität und Festigkeit gegen Abrieb und Beschädigung, verbunden mit einer minimalen Stärke und einer hohen Flexibilität.

Entlang der beiden Längskanten sind auf der Bahn 12 selbstklebende Klebstreifen 13, 15 befestigt, abgedeckt mit Schutzpapier 14, 16.

Fig. 2 zeigt, daß die Materialbahn mit Hilfe des einen Klebstreifens 13 an dem zu umhüllenden Gegenstand 1, beispielsweise einem Kabelbaum, angeklebt wird, um eine exakte und schnelle Montage zu ermöglichen. Anschließend wird die Materialbahn um den Gegenstand 1 herumgewickelt. Ihr freies Ende wird mit Hilfe des zweiten Klebstreifens 15 fixiert. Da die in Fig. 1 dargestellte Materialbahn sehr dünn ist, kann sie auch mehrfach um den Gegenstand 1 herumgewickelt werden, um so mehr Volumen, mehr Schallschutz und mehr Verletzungsschutz zu bekommen.

Fig. 3 zeigt eine alternative Materialbahn. Diese umfaßt zunächst wieder die Außenschicht 10 aus einem PES-Spinnfaservlies oder einem PES-Gewirke, und die aufkaschierte Bahn 12 aus Gewirke oder Vlies. Auf der Bahn 12 ist ein Streifen 18 aus einem Schaumstoff - PUR-Weichschaum, PE-Schaum oder Zellkautschuk - oder auch aus einem natürlichen oder synthetischen Filz aufkaschiert, und zwar mit Hilfe einer Kaschierschicht 17. Der selbstklebende Klebstreifen 13, abgedeckt mit Schutzpapier 14, befindet sich nun auf dem Streifen 18.

Der Streifen 18 aus Schaumstoff oder Filz ist schmäler zugeschnitten als die Bahn 12. Dadurch entsteht ein Überschlag. Auf diesem ist ein Hakenband 21 eines Klettverschlusses befestigt. Das zugehörige Flauschband 22 befindet sich auf der Außenseite der Außenschicht 10. Hakenband 21 und Flauschband 22 können ihre Position auch tauschen. Ein derartiger Klettverschluß läßt sich sehr schnell schließen und bei Bedarfjederzeit wieder öffnen. Er ist ausreichend flexibel. Sein besonderer Vorteil ist, daß ihm Alter oder Wärme kaum etwas anhaben.

Es versteht sich, daß anstelle des Hakenbandes 21 auch der selbstklebende Klebstreifen 15 angebracht werden kann, um, wie in Fig. 2 dargestellt, die Schutzummantelung zu schließen.

## Patentansprüche

1. Schutzummantelung für Kabel, Leitungen, Litzen, Hüllrohre und dergleichen langgestreckte, bewegliche Gegenstände, die in rotierenden bzw. vibrierenden Maschinen, Anlagen oder Fahrzeugen verlegt werden, insbesondere für Kabelbäume in Kraftfahrzeugen, in Waschmaschinen, in Kompressoren, in Schaltschränken usw., umfassend
- eine textile Außenschicht (10),
- darauf wenigstens eine weitere Schicht (12),
- einen selbstklebenden Klebstreifen (13) entlang der einen Längskante der Schutzummantelung, abgedeckt durch ein Schutzpapier (14)
- und einen weiteren Verschlußstreifen (15, 16) entlang der anderen Längskante der Schutzummantelung,
gekennzeichnet durch die Merkmale:
- Außenschicht (10) und weitere Schicht (12) sind gebildet durch eine fest verbundene Einheit aus einem Spinnfaservlies und einem Gewirke,
- der weitere Verschlußstreifen ist ein selbstklebender Klebstreifen (15), abgedeckt mit Schutzpapier bzw. Schutzfolie (16).

2. Schutzummantelung für Kabel, Leitungen, Litzen, Hüllrohre und dergleichen langgestreckte, bewegliche Gegenstände, die in rotierenden bzw. vibrierenden Maschinen, Anlagen oder Fahrzeugen verlegt werden, insbesondere für Kabelbäume in Kraftfahrzeugen, in Waschmaschinen, in Kompressoren, in Schaltschränken usw., umfassend
- eine textile Außenschicht (10),
- darauf wenigstens eine weitere Schicht (12),
- einen selbstklebenden Klebstreifen (13) entlang der einen Längskante der Schutzummantelung, abgedeckt durch ein Schutzpapier (14)
- und einen weiteren Verschlußstreifen (15, 16) entlang der anderen Längskante der Schutzummantelung,
gekennzeichnet durch die Merkmale:
- Außenschicht (10) und weitere Schicht (12) sind gebildet durch eine fest verbundene Einheit aus einem Spinnfaservlies und einem Gewirke,
- der weitere Verschlußstreifen ist das Hakenband (21) eines Klettverschlusses,
- das Flauschband (22) des Klettverschlusses befindet sich auf der Außenschicht (10) entlang der einen Längskante der Schutzummantelung.

3. Schutzummantelung nach Anspruch 1 oder 2, gekennzeichnet durch die Merkmale:
- das Spinnfaservlies bildet die Außenschicht (10),
- das Gewirke bildet die weitere Schicht (12).

4. Schutzummantelung nach Anspruch 1, 2 oder 3, gekennzeichnet durch das Merkmal:
- zwischen Spinnfaservlies (10, 12) und Gewirke (12, 10) befindet sich eine Kaschierschicht (11).

5. Schutzummantelung nach einem der Ansprüche 1 bis 4, gekennzeichnet durch das Merkmal:
- auf der weiteren Schicht (12) ist ein Schaumstoff- oder Filzstreifen (18) befestigt.

6. Schutzummantelung nach Anspruch 5, gekennzeichnet durch das Merkmal:
- zwischen der weiteren Schicht (12) und Schaumstoff- bzw. Filzstreifen (18) befindet sich eine Kaschierschicht (17).

7. Schutzummantelung nach Anspruch 5 oder 6, gekennzeichnet durch die Merkmale:
- der Schaumstoff- bzw. Filzstreifen (18) ist schmaler als die weitere Schicht (12), so daß ein Überschlag entsteht,
- der weitere Verschlußstreifen (15, 16; 21) befindet sich auf dem Überschlag.

8. Schutzummantelung nach Anspruch 5, gekennzeichnet durch das Merkmal:
- der Schaumstoff ist ein PUR-Weichschaum, ein PE-Schaum oder ein Zellkautschuk.

9. Schutzummantelung nach einem der Ansprüche 1 bis 8, gekennzeichnet durch das Merkmal:
- Spinnfaservlies und Gewirke bestehen wenigstens teilweise aus Polyester.

10. Schutzummantelung nach einem der Ansprüche 1 bis 9, gekennzeichnet durch das Merkmal:
- Spinnfaservlies und Gewirke bestehen wenigstens teilweise aus temperaturbeständigen textilen oder textilartigen Fasern, nämlich
-- Glasfasern,
-- Keramikfasern oder
-- Aramid-Fasern.
